# EUROPEAN PATENT APPLICATION

(11) **EP 2 570 388 A1**
(43) Date of publication of application: **20.03.2013**
(21) Application number: 11780731.3
(22) Date of filing: 10.05.2011
(51) Int. Cl.: C02F 1/44, C02F 1/28, E03C 1/10, F16K 11/076

(54) **SPOUT FAUCET**

(30) Priority: 12.05.2010 JP 2010139918
(71) Applicant: Kawakami, Yoichi, Shizuoka 433-8122 (JP); Kawakami, Akiyasu, Hamamatsu-shi, Shizuoka 433-8122 (JP)
(72) Inventor: Kawakami, Yoichi, Shizuoka 433-8122 (JP); Kawakami, Akiyasu, Hamamatsu-shi, Shizuoka 433-8122 (JP)
(74) Representative: Gulde, Klaus W.
(86) International application number: PCT/JP2011/061134
(87) International publication number: WO 2011/142476

(57) **Abstract**

Disclosed is spout faucet that: eliminates clogging of a water purifier and a demineralizer; backwashes and cleans particles treated by a filter, which are the cause of clogging, to remove same from the filter, and cleans and discharges same to outside a unit; regenerates the filter and eliminates the inconvenience for users of being forced to replace the filter due to clogging because backwashing is not performed, even though the filter still maintains sufficient filtering capacity; and can discharge and spout from a sink discharge water from a water treatment unit and use same as general service water, to address the issue of hygiene, because currently a hose is inserted into an drainage pipes underneath sinks, and the problem of increasingly serious fresh water shortages in the future.

## Description

### FIELD OF THE INVENTION

The present invention relates to a spout faucet, and more specifically, to a spout faucet with a built-in switching valve apparatus. The present invention enables water supply by a three-way pipe and a water supply by a water purifier through tap-water pipe switching.

### BACKGROUND OF THE INVENTION

An apparatus with a switching valve cannot be found in the current market.

### Technical Problem To Be Solved By The invention

When generating a membrane-filtered water (hereinafter referred to as RO water) using a reverse osmosis membrane water processor (hereinafter referred to as the RO device), it is generally required to drain discharge water with an amount equivalent to 1 to 3 times of the RO water (water not filtered through a reverse osmosis membrane is hereinafter called discharge water) and a discharge water to flush a membrane surface with a high flow. However, since the RO device is received at a lower part of a cupboard, this water is discharged by inserting a water pipe into a sewer pipe opening of a cupboard. Due to the worldwide problem of insufficient fresh water, which can be expected to be even worse in the future, it is desirable to reuse the water discharged from a sink table as general service water.

Furthermore, high-flow water is needed to flush the membrane on the RO membrane surface, and this flushing (hereinafter referred to as rinsing) water is also drained through the sewer pipe. However, since the sewer pipe is not hygienic, the RO device connected to the sewer pipe also has a hygienic issue.

Out of the consideration of environment and health, there is an increasing demand on clean and safe water, which, on one hand, raises the demand on a water purifier or a reverse osmosis purifier, and on the other hand, brings inconvenience to users who purchase these machines.

The biggest problem is filter membrane clogging inside a machine. Due to the clogging, it is compulsory to replace the filter membrane. However, it is rather troublesome to replace the filter membrane, particular replacing the filter membrane of a machine mounted in the lower part of the sink table, which is impossible for a consumer to perform; the replacement work has to rely on a professional.

In order to be mountable in the lower part of a sink table or at other place, the machine has to be miniaturized, but miniaturization results in less water flow that can be processed by the filter membrane of a water processing machine, which then increases the clogging odds. Because miniaturization seems to be an absolute condition, the filter material has to be replaced frequently.

For a purified water making machine having a RO membrane and the like, it first removes the dregs in the water during the pretreatment, and then removes the organics in the water with activated carbon, and finally the water is completely processed through the RO membrane. Although it is called "remove" here, it is not a real removal, but an interception of dregs instead; thus, the inside of the water purifier for RO membrane pretreatment becomes the place for intercepting the removed objects; these intercepted objects accumulate at most of the front surface of the filter membrane, which causes decrease of the flow; however, through the above purified water making machine, these intercepted objects and the bacteria reproduced within the intercepted objects are drained outside of the machine, and the RO membrane is cleaned as well.

### SUMMARY OF THE INVENTION

### Technical Means To Be Solved By The invention

An objective of the present invention lies in providing a spout faucet that can discharge water for flushing an RO membrane and all of the discharge water and backwashing water during producing RO water from a sink, such that the user may reuse the above water as general service water.

### Technical Effects Produced By The Invention

For a precise filter membrane and a limiting filter membrane and the like of a water purifier as used in preliminary treatment, filter membrane reproduction can be achieved through backwashing without lowering the flow; compared with the scenario of not using backwash, a capability with times of filter capacities can be maintained; moreover, through backwashing, the bacteria are discharged outside the machine, which reduces RO membrane clogging caused by bacteria; through backwashing the RO membrane, its total treatment capacity can increase multiple times; further, by using a spout faucet on a sink table to let off the discharge water for producing RO water, the discharge water for flushing the RO membrane surface, and the discharge water for backwashing, such discharge water will not be waste water, but can be used as general service water.

### BRIEF DESCRIPTION OF THE DRAWINGS

FIG. 1 is a stereogram of a spout faucet having a RO water outlet pipe and a cleaning water and backwashing water outlet pipe and mounted on a sink table.
FIG. 2 is a stereogram of a spout faucet identical to FIG. 1 except that the outlet pipes are shortened and the jet nozzle housing is removed.
FIG. 3 is a front view of the spout faucet.
FIG. 4 is a back view of the spout faucet.
FIG. 5 is a top view of the spout faucet.
FIG. 6 is a bottom view of the spout faucet.
FIG. 7 is a right side view of the spout faucet.
FIG. 8 is a left side view of the spout faucet.
FIG. 9 is an A-A line sectional view of the top view of the spout faucet with the outlet pipes of the spout faucet being removed.
FIG. 10 shows B-B, C-C, D-D sectional views of the front view of the spout faucet with the outlet pipes of the spout faucet being removed.
FIG. 11 is a sectional view along the A-A line of FIG. 9.
FIG. 12 is a diagram of disposing the B-B line sectional view of FIG. 10 at the upper left, disposing the C-C line sectional view of FIG. 10 at the upper middle, disposing the D-D line sectional view of FIG. 10 at the upper right, and disposing a three-way pipe, a water pipe, a water purifier, and a reverse osmosis membrane device at the lower part when a switching valve is at the position of producing RO water.
FIG. 13 is a sectional view along the A-A line of FIG. 9.
FIG. 14 shows sectional views along the B-B, C-C, D-D lines of FIG. 10 and schematic diagrams of various devices, identical to FIG. 12, at a water shutdown position of a valve.
FIG. 15 is a sectional view along the A-A line of FIG. 9.
FIG. 16 shows sectional views along the B-B, C-C, D-D lines of FIG. 10 and schematic diagrams of various devices, identical to FIG. 12, at a rinsing position of a valve.
FIG. 17 is a sectional view along the A-A line of FIG. 9.
FIG. 18 shows sectional views along the B-B, C-C, D-D lines of FIG. 10 and schematic diagrams of various devices.
FIG. 19 shows a sectional view along the A-A line of FIG. 9.
FIG. 20 shows sectional views along B-B, C-C, D-D lines of FIG. 10 and schematic diagrams of various devices.
FIG. 21 shows a sectional view along the A-A line of FIG. 9.
FIG. 22 shows sectional views along B-B, C-C, D-D lines of FIG. 10 and schematic diagrams of various devices.
FIG. 23 shows a sectional view along the A-A line of FIG. 9.
FIG. 24 shows sectional views along the B-B, C-C, D-D lines of FIG. 10 and schematic diagrams of various devices.
FIG. 25 is a section view along the E-E line of FIG. 32 (a top view of the spout faucet).
FIG. 26 shows a diagram of disposing the F-F line section view of FIG. 33 (a front view of the spout faucet) at the upper left, disposing the G-G line sectional view at the upper middle, and disposing H-H line sectional view at the upper right, and disposing a three-way pipe, a water pipe, a water purifier, and a reverse osmosis membrane device at the lower part when a switching valve is at the position of producing RO water.
FIG. 27 is a sectional view along the E-E line of FIG. 32.
FIG. 28 shows a diagram of disposing the F-F line section view of FIG. 33 (a front view of the spout faucet) at the upper left, disposing the G-G line sectional view at the upper middle, and disposing H-H line sectional view at the upper right, and disposing a three-way pipe, a water pipe, a water purifier, and a reverse osmosis membrane device at the lower part when a switching valve is at the position of producing RO water.
FIG. 29 shows a section view along the E-E line of FIG. 32 (a top view of the spout faucet).
FIG. 30 shows a diagram of disposing the F-F line section view of FIG. 33 (a front view of the spout faucet) at the upper left, disposing the G-G line sectional view at the upper middle, and disposing H-H line sectional view at the upper right, and disposing a three-way pipe, a water pipe, a water purifier, and a reverse osmosis membrane device at the lower part when a switching valve is at the position of producing RO water.
FIG. 31 shows a back view of the spout faucet.
FIG. 32 shows a top view of the spout faucet.
FIG. 33 shows a front view of the spout faucet.
FIG. 34 shows a stereogram of valve 2.
FIG. 35 is a general diagram of a water discharge pipe, a flow reducer, an electromagnetic valve, and water discharge of a RO device.
FIG. 36 is a general diagram of a RO device and inserting the water discharge of the RO device into a sewer pipe.

### List of reference numbers:

- 1:: spout faucet valve box
- 2:: valve
- 3:: tap water inlet port
- 4:: tap water outlet port
- 5:: water purifier entry
- 6:: water purifier (water purifying process)
- 7:: water purifier exit
- 8:: RO device entry
- 9:: reverse osmosis membrane processor, RO device
- 10:: RO water exit of the RO device
- 11:: RO water inlet port
- 12:: RO water outlet port
- 13:: discharge water outlet port
- 14:: handle
- 15:: three-way pipe
- 16:: tap water inlet pore
- 17:: tap water outlet pore
- 17A:: tap water inlet /outlet pore
- 18:: discharge water inlet port
- 19:: RO water inlet pore
- 20:: RO water outlet pore
- 21:: RO water circulation chamber, RO circulation portion
- 22:: discharge water circulation chamber, discharge water circulation portion
- 23:: discharge water inlet pores
- 23A:: discharge water inlet pores at the RO producing position
- 24:: discharge water outlet pore
- 24A:: discharge water outlet pore at the RO producing position
- 25:: valve gland
- 26:: tap water circulation chamber, tap water circulation portion
- 27:: spacing wall component
- 27C:: spacing wall
- 28:: water pipe
- 29:: communicating pore of a projection portion
- 30:: discharge water circulation path
- 31:: discharge water branch
- 32:: jet nozzle
- 33:: discharge water outlet pipe
- 34:: RO water outlet pipe
- 35:: jet nozzle housing
- 36:: sink table
- 37:: exhaust port of the RO device
- 38:: magnetic block
- 39:: steering switch (inductive switch)
- 40:: electric wire
- 41:: plug
- 42:: computer box, transformer
- 43:: electromagnetic valve
- 44:: switch fixing plate
- 45:: seal slot
- 46:: flow reducer
- 47:: sewer pipeline of the sink table
- 48:: fixing portion

### DETAILED DESCRIPTION OF THE PREFERRED EMBODIMENTS

The present invention provides a spout faucet with a built-in switching valve for producing RO water. The spout faucet comprises a valve box, a valve, and a handle. The valve box has a tap water inlet port, a tap water outlet port, a discharge water inlet port, a discharge water outlet port, a RO water inlet pore, and a RO water outlet port. The valve has a cylindrical valve chamber disposed at a center of the valve box and communicating with respective ports, and a spacing wall disposed in an interior forming a cylindrical shape. Inside the valve chamber are included: a tap water circulation portion, tap water inlet pores connected to the circulation portion, and tap water outlet pores; RO water inlet pores and RO water outlet pores connecting to a RO water circulation portion; a plurality of discharge water inlet pores and a plurality of discharge water outlet pores connected to the discharge water circulation portion; a cave inside an axis as a discharge water communicating path which is connected to a plurality of discharge water branches; the handle is connected to the valve so as to thereby rotate and operate the valve; through rotating this handle, the tap water flowing in from the tap water inlet port is switched to flow out; at a RO water producing position, the tap water, together with the water purifier and the RO device, adopts a forward water flow path, but adopts a reverse water flow path at a backwashing position; at a rinsing position, the water purifier and the RO device together adopt the forward water flow path, such that the discharge water that has been discharged through inserting a water pipe into the a sewer pipe of the cupboard flows out from an exhaust portion at the upper part of the cupboard, and the discharge water may be used as general service water.

### EMBODIMENT 1

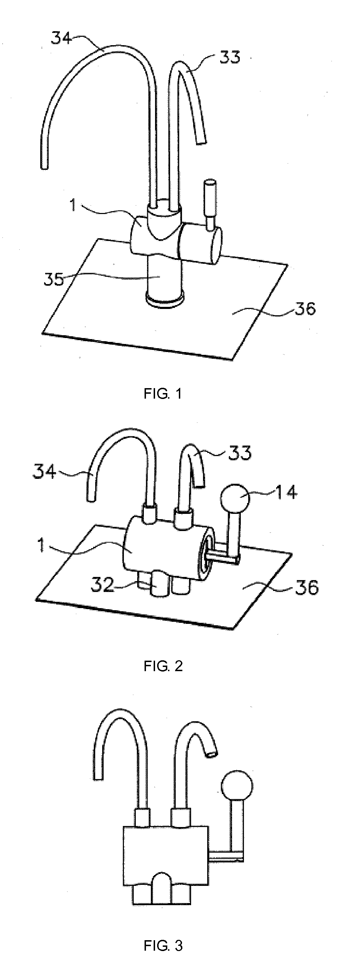

Hereinafter, Embodiment 1 will be illustrated with reference to FIGS. 1-16. Moreover, for the symbols appearing in the drawings, the same portions are attached with the same reference sign. Besides, the seal component is omitted.

FIG. 1 shows a stereogram. FIG. 2 shows that the outlet pipes 33 and 34, with the portion of cylinder 35 in FIG. 1 being removed, which merely shows a jet nozzle 32. The reference sign 36 shows a stainless steel cupboard that is mounted with the present spout faucet 1.

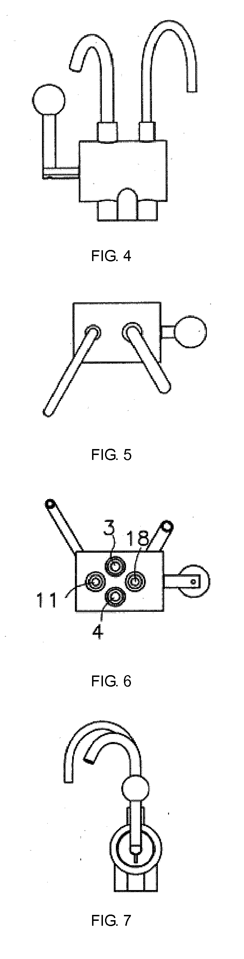

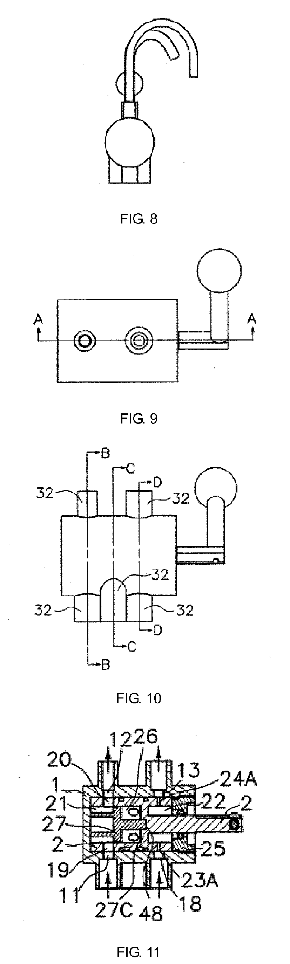

FIG. 3 is a front view, FIG. 4 is a rear view, FIG. 5 is a tip view, FIG. 6 is a bottom view, FIG. 7 is a right side view, FIG. 8 is a left side view, FIG. 9 is a top view of a spout faucet 1 with outlet pipes 33 and 34 being removed, and FIG. 10 is a front view of the spout faucet 1 with the RO outlet pipe and the discharge water outlet pipe 33 being removed, like FIG. 9.

Referring to FIGS. 11-16, through operating valve 2 in the facet valve box 1, the water flowing paths at the RO water producing position, the tap water stop position, and the rinsing position are illustrated.

The spacing wall 27C in FIG. 11 is formed by plate connecting an inside-cylinder wall of the valve 2 and the valve shaft outer wall; the spacing wall 27C is integral with the valve 2; a spacing wall component 27 is inserted inside the cylinder of the valve 2; the fixing portion 48 of the spacing wall is fixed on the valve shaft and rotates with rotation of the valve 2.

There is further illustrated the water path at the RO water producing position when generating the RO water and the discharge water.

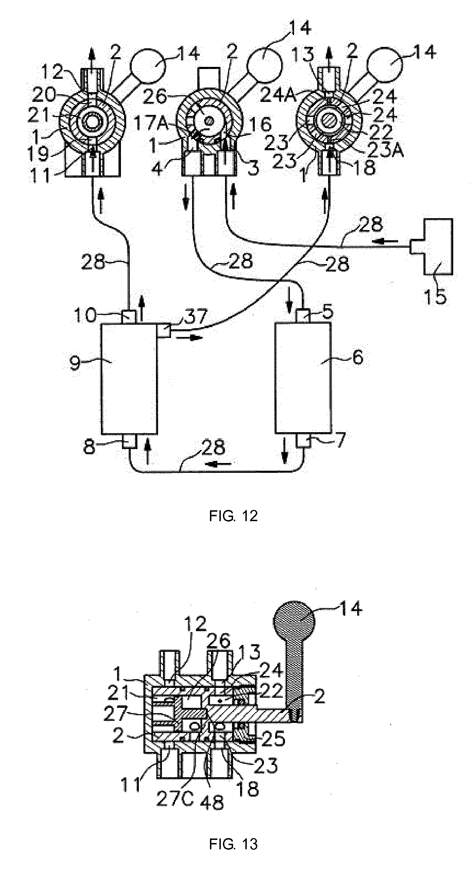

FIG. 11 is a section view along the A-A line of FIG. 9. At the upper part of FIG. 12, the sectional view along B-B line of FIG. 10 is disposed at the left side to indicate the path of RO water with arrows; the sectional view along C-C line disposed at the center indicates the path of tap water with arrows; the sectional view along D-D line disposed at the right side indicates the path of discharge water with arrows; at the lower part of FIG. 12 are disposed the water purifier 6, the reverse osmosis membrane device 9, hose or water pipe 28, and a three-way pipe 15 for transporting tap water, wherein this diagram indicates the water path at the RO producing position. The water path at the RO water producing position is specified below: the tap water supplied from the three-way pipe 15, through the water pipe 28, and then through the tap water inlet port 3 of the valve box 1 and tap water inlet pore of the valve 2 sequentially, enters into the tap water circulation portion 26, and then flows out from the tap water outlet port 4 of the valve box 1 through the tap water inlet pore 17A of the valve 2, and then flows into the water purifier 6 from the inlet 5 of the water purifier 6 through the water pipe 28, flows out through the outlet 7 of the purifier, and flows into the RO device 9 through the inlet 8 of the RO device 9 through the water pipe 28; the RO water as produced at RO device 9, from the outlet 10 of the RO device 9, through the RO water inlet port 11 of the valve 1 via the water pipe 28, from the RO water inlet pore 19 of the valve 2 sequentially through the RO water circulation portion 21, the RO water outlet pore 20 of the valve 2, and then flows out from the RO water outlet port 12 of the valve box 1, and flows out from the RO water outlet pipe 34 of FIG. 2; the discharge water flowing out from the discharge water outlet port 37 of the RO device 9, from the discharge water inlet port 18 of the valve box 1, and then through the discharge water inlet pores 23A of the valve 2, flows through the discharge water circulation portion 22, from the discharge water outlet pore 24A of the valve 2, and then flows out through the discharge water outlet port 13 of the valve box 1, thereby discharging water from the discharge water pipe 33 of FIG. 2.

Hereinafter, the valve 2 at the water stop position will be illustrated.

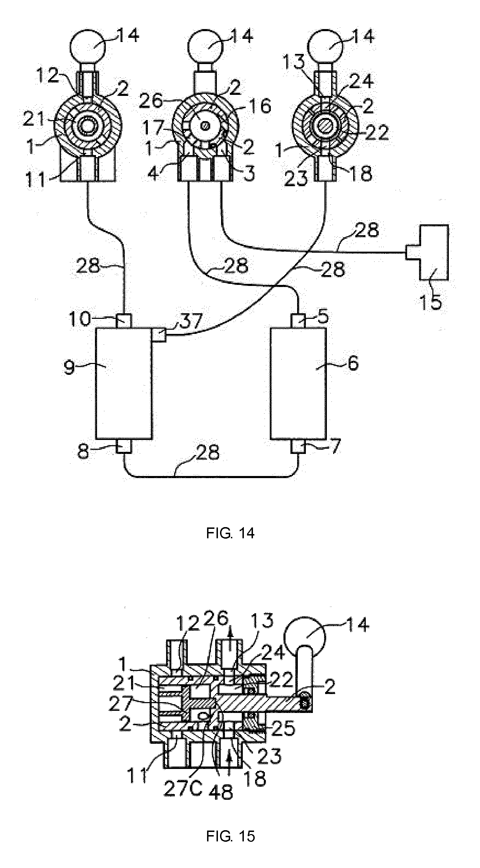

FIG. 13 is the sectional view along the A-A line of FIG. 9 at the water stop position; the left side of FIG. 14 is the sectional view along B-B line of FIG. 10 at the water stop position; the center is a sectional view along C-C line; the right side is a sectional view along D-D line; the lower part shows schematic diagrams of a plurality of other devices at the RO water producing position.

The water supplied to the three-way pipe 15 through tap water flows into the water pipe 28 and also flows into through the tap water inlet port 3 of the valve box 1; however, since the tap water inlet port 3 of the valve box 1 is switched off by the valve 2, the water flow stops. At this point, if the discharge water outlet pore 24 is disposed at the position communicative with the tap water inlet port 18 of the valve box 1 and the position of the valve 2 in communication with the discharge water inlet pores 23 and the discharge water outlet port 13 of the valve box 1, the remnant pressure in the water purifier 6 and the RO device after water stop may be discharged off.

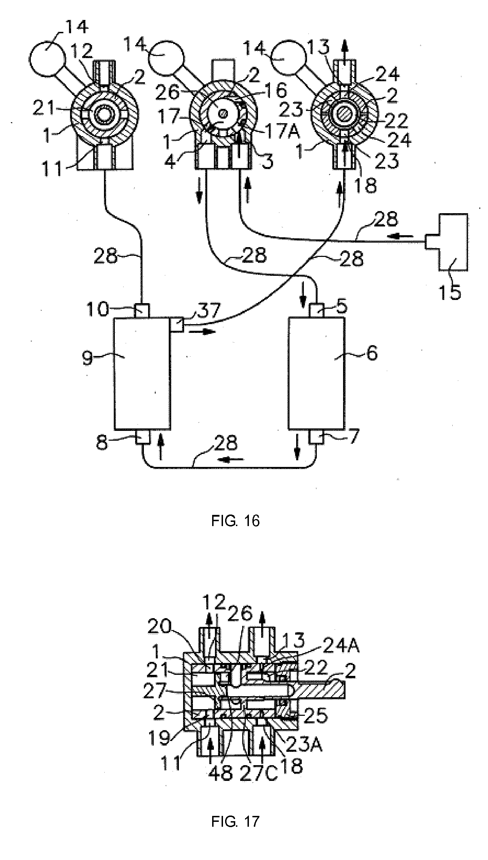

Referring to FIGS. 15 and 16, the water path from the rotating valve 2 to the rinsing position at the center is illustrated.

FIG. 15 is a sectional view along A-A line of FIG.9 at the rinsing position; the left side of FIG. 16 is a sectional view long B-B line of FIG. 10 at the rinsing position, the center is a sectional view along the C-C line, the right side is a sectional view along the D-D line, and the lower part shows a plurality of devices represented by 28, with arrows indicating water flow.

The tap water supplied from the three-way pipe 15 flows through the water pipe 28 and arrives at the tap water inlet port 3 of the valve box 1, and then through the tap water inlet pore 17A of the valve 2, into the tap water circulation portion 26, and flows out from the tap water outlet port 4 of the valve box 1 via the tap water outlet pore 17 of the valve 2, through the water pipe 28, and into the water purifier 6 from the water purifier entry 5, through the water pipe 28 from the water purifier exit 7, into the RO device from the connected RO device entry 8; after cleaning the RO membrane surface, through the water pipe 28 from the discharge water outlet port 37 of the RO device, first from the discharge water inlet port 18 of the valve box 1, and then from the discharge water inlet pores 23 of the valve 2, flows into the discharge water circulation portion 22, through the discharge water outlet pore 24 of the valve 2, and then flows out from the discharge water outlet port 13 of the valve box 1, and the water flows out from the discharge water outlet pipe 33 of FIG. 2. At this position, since the RO water inlet pore 11 of the valve box 1 is switched off by the valve, no RO water flows out.

A RO water, cleaning water spout faucet with a built-in switching valve is characterized by a spacing wall formed by connecting an inside-cylinder wall of such cylinder-shaped valve 2 and an outer wall of a shaft of a valve 2, and a tap water circulation portion 26, wherein the tap water circulation portion 26 likewise fixes at the insider-cylinder wall of the valve 2 a spacing wall component 27 rotating with the valve 2; at the center of a spout faucet valve box 1 forms a tap water inlet port 3 and a tap water outlet port 4.

### EMBODIMENT 2

Centered with FIGS. 17 to 24, illustration is made with reference to the Figures in Embodiment 1.

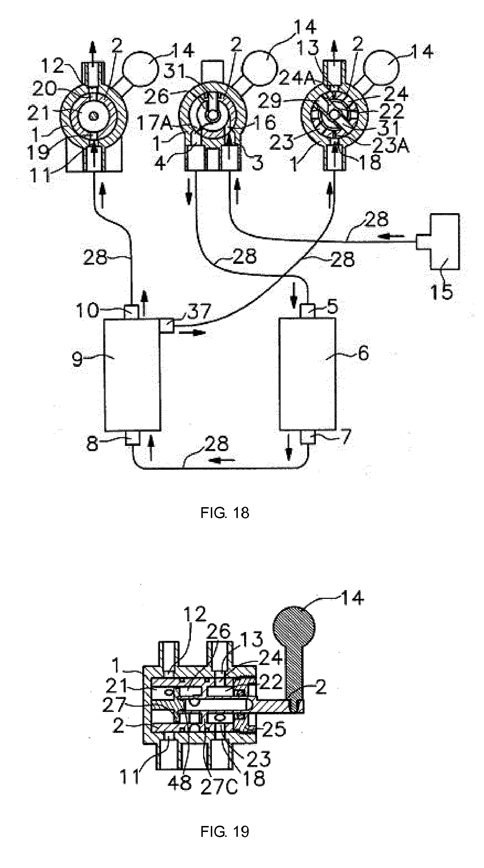

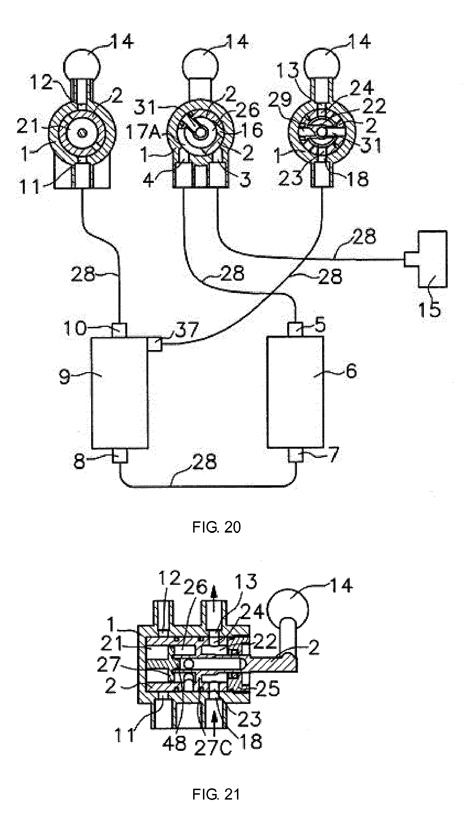

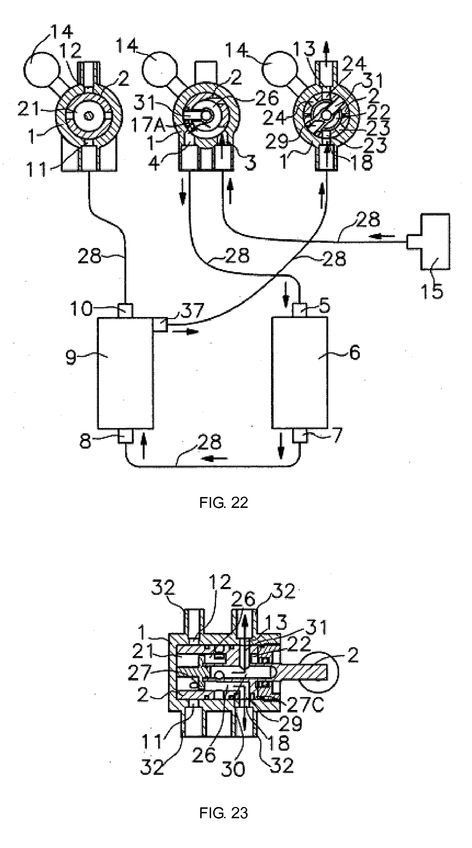

FIG. 17 is a sectional view along A-A line of FIG. 19 at the RO water producing position; FIG. 19 is a sectional view along A-A line of FIG. 9 at the water stop position; FIG. 21 is a sectional view along A-A line of FIG. 9 at the rinsing position; and FIG. 23 is a sectional view along A-A line of FIG. 9 at the backwashing position.

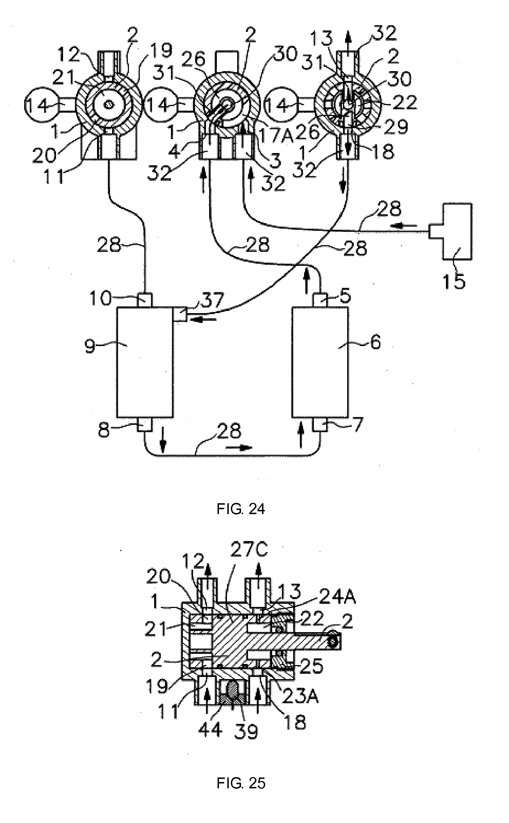

FIG. 18 shows the RO water producing position, FIG. 20 shows the water stop position, FIG. 22 shows the rinsing position, and FIG. 24 shows the backwashing position; at the left side of each Figure is the sectional view along B-B line of FIG. 10, at the center is disposed the sectional view along C-C line, at the right side is disposed the sectional view along the D-D line; at the lower part of each diagram show diagrams of the three-way pipe 15, the water pipe 28, the water purifier 6, and the RO device 9, with arrows indicating water path.

The valve 2 at the RO water producing position is illustrated with reference to FIG. 17 and FIG. 18.

The shaft of the valve 2 is extended to the center of the valve 2 in embodiment 1; a cylinder-shaped hollow is arranged inside the shaft; a spacing wall component 27 closely attached to the front end of the cylinder-shaped hollow (hereinafter referred to as inner cave) and the inner wall of the valve 2 is disposed, such that the RO water circulation portion 21 and the tap water circulation portion are independent from each other.

The path of the RO water at the RO water producing position is specified below: the tap water supplied from the three-way pipe 15 flows through the water pipe 28, from the tap water inlet port 3 of the valve box 1, and then flows out from the tap water inlet port 16 of the valve 2 - tap water circulation portion 26 - the tap water inlet port/outlet pore 17A of the valve 2 - tap water outlet port 4 of the valve box 1 - water pipe 28 - entry 5 of the water purifier 6 - water purifier exit 7 - water pipe 28 - RO device entry 8 - RO device 9 - RO water outlet port 10- water pipe 28 - RO water inlet port 11 of the valve box 1- RO water inlet pore 19 of the valve 2- RO water circulation portion 21- RO water outlet pore 20 of the valve 2 - RO water outlet port 2 of the valve box 1; the discharge water path when producing RO water is specified below: RO device discharge water outlet port 37 - water pipe 28 - discharge water inlet port 18 of the valve box 1 - discharge water inlet pores 23A of the valve 2 - discharge water circulation portion 22 - discharge water outlet pore 24A of the valve 2 - flowing out from the discharge water outlet port 13 of the valve box 1.

Referring to FIG. 19 and FIG.20, the water stop position of valve 2 is illustrated.

Through a portion of the outer cylinder of the valve 2 at the water stop position, since the water at the tap water inlet port 3 of the valve box 1 is switched off, the water flow stops.

Referring to FIG. 21 and FIG. 22, the path of the water at the RO membrane mass-flow rinsing position is illustrated.

the tap water supplied by the three-way pipe 15 - water pipe 28 - tap water inlet port of the valve box 1 - tap water inlet port/outlet pore 17A of the valve 2 - tap water circulation portion 26 - tap water inlet port/outlet pore 17A of valve 2 - tap water outlet port 4 of the valve box 1 - water pipe 28 - water purifier entry 5 - water purifier exit 7 - water pipe 28 - RO device entry 8 - RO device 9 - RO device discharge water outlet port 37 - discharge water inlet port 18 of the valve box 1 - discharge water inlet pores 23 of valve 2 - discharge water circulation portion 22 - discharge water outlet pore 24 of the valve 2 - flowing out from the discharge water outlet port 13 of the valve box 1.

Referring to FIG. 23 and FIG. 24, the path of water at the backwashing (backwater cleaning) position is illustrated. A discharge water branch 31 is disposed at two ends of a discharge water circulation path 30 of the inner cylinder of the valve 2.

Tap water supplied by the three-way pipe 15 - water pipe 28 - tap water inlet port 3 of the valve box 1 - flow into the tap water circulation portion 26 from the tap water inlet port/outlet 17A of the valve 2, through the communicating pore 29 of the discharge water circulation portion 22 in communication with the water circulation portion 26 as shown in FIG. 23, flow out from the discharge water inlet port 18 of the valve box 1 - (referring to the right side view at the upper portion of FIG. 24) - water pipe 28 - flow into the RO device discharge water outlet port 37, backwash the RO membrane surface inside the RO device 9, flow out from the RO device entry 8 - water pipe 28 - water purifier exit 7, backwash the filter material inside the water purifier 6- water purifier entry 5 - water pipe 28, flow into the tap water outlet port 4 of the valve box 1, flow into the water discharge branch 31 of the discharge water circulation path 30 of the valve 2, from the discharge water circulation path 30, through the discharge water branch 31 at the other end, flow out from the discharge water outlet port 13 of the valve box 1.

### EMBODIMENT 3

Embodiment 3 is illustrated with reference to FIGS. 25-35.

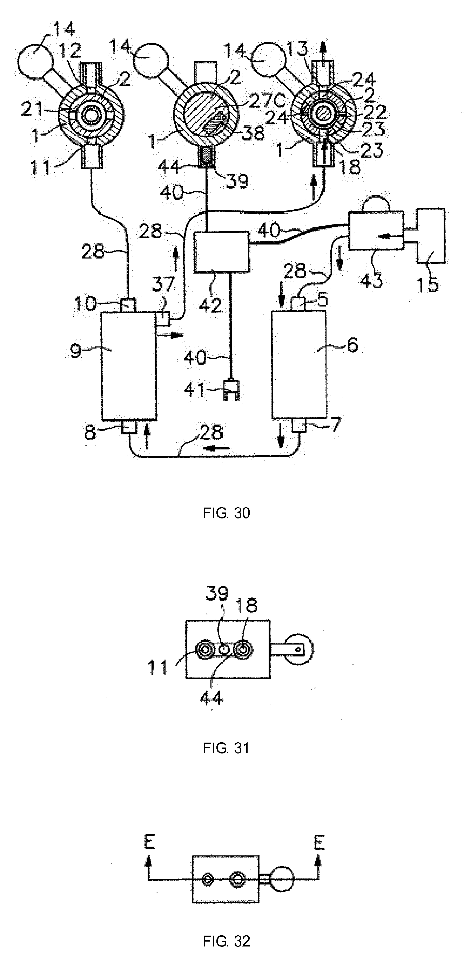

FIG. 25, FIG. 27, and FIG. 29 are sectional views along E-E line on the top view of the spout faucet of FIG. 32.

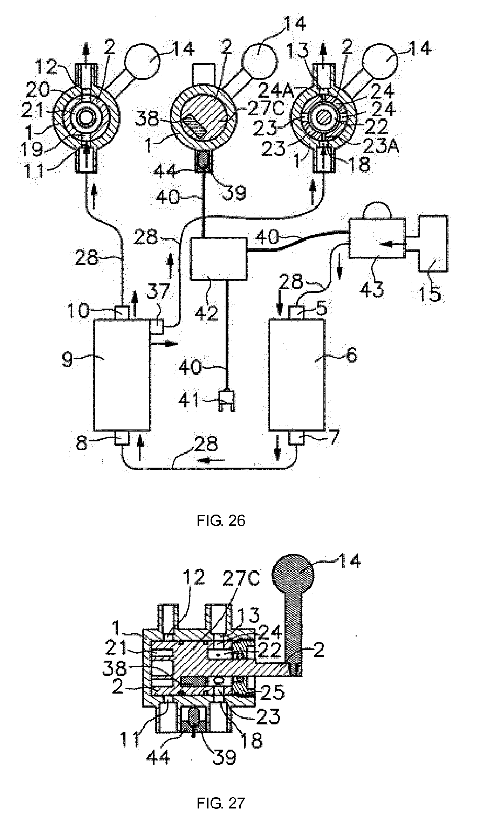

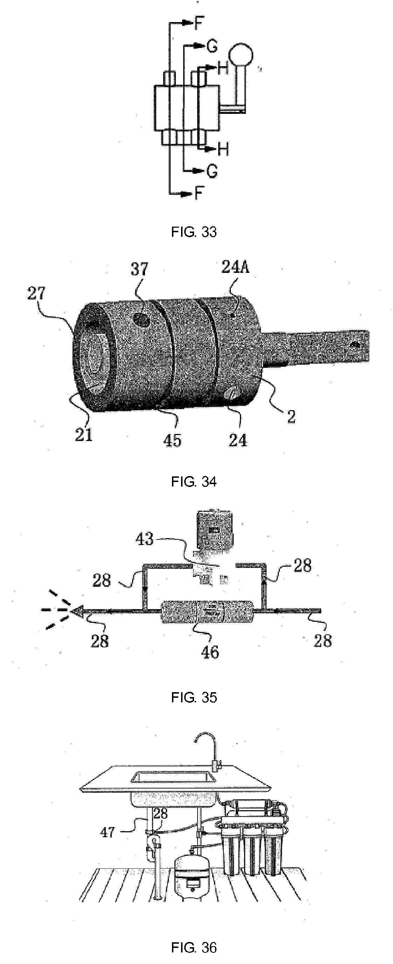

At the left side of FIG. 26, FIG. 27, and FIG. 30 is disposed a sectional view along the F-F line as shown in the front view of the valve 2 and the valve box 1 having a handle in FIG.33, at the center is disposed a section view along G-G line, at the right side is disposed a sectional view along H-H line, respectively; and at the lower part indicates the water path of the water processor with arrows, respectively.

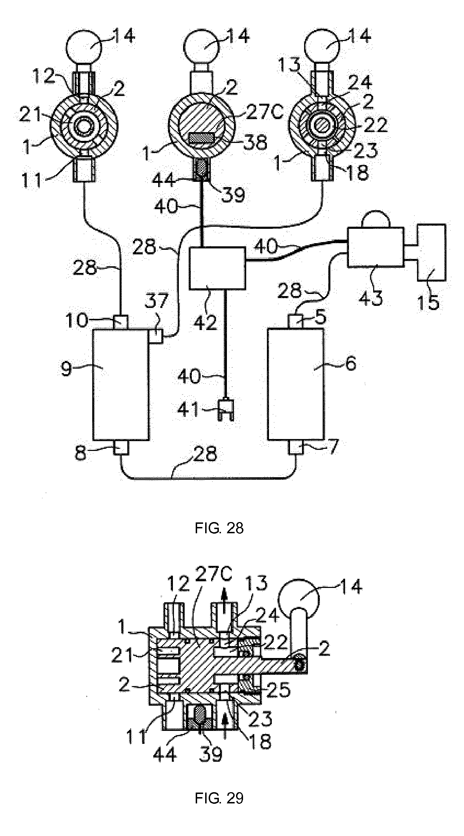

At the spout faucet illustrated in this embodiment, like above Embodiment 1, FIGs. 25 and 26 show the RO producing position, FIGS. 27, 28 show the water stop position, and FIGS. 29, 30 show the functions of the rinsing position. However, at the water stop position, this embodiment is implemented through an electromagnetic valve 43.

By removing the tap water inlet port 3 and tap water inlet port 4, as well as nozzles 32 thereof, of the valve box 1 in Embodiment 1, removing the tap water inlet pore 16, tap water outlet pore 17, and the tap water circulation portion 26 of the valve 2, as well as the spacing wall component 27 fixed to the valve 2, the spacing wall 27C is formed, and the RO water circulation portion 21 and the discharge water circulation portion 22 are formed independently, respectively; by disposing a magnetic block 38 in the valve 2, at the water stop position, the magnetic block 38 in the valve 2 is rotated through a handle to induct a steering switch 39 such that it is fixed to the valve box 1; through a computer box 42 composed on a transformer and other components via electric wire 40, the transformed electric power as transported via the electric wire 40 has the magnetic block 38 induct the steering switch 39 to switch off the electromagnetic valve 43.

FIG. 31 shows a bottom view of the spout faucet, which shows the steering switch 39 and a switch fixing plate 44 between the RO water inlet port 11 and the discharge water inlet port 18.

FIG. 26 shows a diagram of water path at the RO water producing position, indicated by arrows. The path is specified below: three-way pipe 15 - electromagnetic valve 43 - water pipe 28 - water purifier 6 - water pipe 28 - RO device 9 - RO water outlet port 10 - RO water inlet port of valve box 1 - RO water inlet pore 19 of valve 2 - RO water circulation portion 21 - RO water outlet pore 20 - RO water flows out from the RO water outlet port 12 of the valve box 1, and discharge water flows out from the discharge water outlet port 37 of another RO device 9 - discharge water flows out- water pipe 28 - discharge water outflow 18 of the valve box 1 - discharge water outlet port 23A of the valve box 2 - discharge water circulation portion 22 - discharge water outlet pore 24A- flows out from the discharge water outlet port 13 of the valve box 1. At this point, the steering switch 39 does not receive the induction from the magnetic block, and the electromagnetic valve is opened.

FIG. 28 shows at the water stop position, transmitting a sounding result to the computer box 42 to close the electromagnetic valve through the inductive steering switch 39 of the magnetic block 38.

FIG. 30 shows a diagram of the water path at the rinsing position. The path is specified below: the steering switch is not inducted; the electromagnetic valve 43 is in an open state - water purifier 6 - water pipe 28 - RO device 9 - discharge water outlet port 37 of the RO device - discharge water inlet port 18 of the valve box 1 - discharge water inlet port 23 of the valve 2 - discharge water communicating path 22 - discharge water outlet pore 24 - flows out from the discharge water outlet port 13 of the valve box 1.

FIG. 34 is a stereograph of valve 2 of Embodiment 1, which is a diagram showing the discharge water outlet pores 24A and 24. The reference sign 45 indicates a groove of a seal which is omitted in the embodiment. The reference sign 21 indicates the RO water circulation portion, and the reference sign 27 is a spacing wall component.

FIG. 35 shows a device 46 (a device called flow reducer) for reducing water discharge as used on a sewer pipeline of a general household RO device and an electromagnetic valve 43 for increasing water discharge to rinse RO membrane surface. The water flows into the water pipe 28 from the discharge water outlet port 37 of the RO device; the electromagnetic valve 43 is switched off when the RO water is generated; when rinsing the membrane, the electromagnetic valve 32 is switched on with mass water flowing out; the front end of the water pipe 28 is switched on for discharging water; the water pipe 28 is inserted into a sewer line through the sink table as shown in FIG. 36 so as to discharge water. However, the spout faucet according to the present invention has a feature of discharging water from the sink to be used as general service water.

### Industrial Applicability

As a preliminary water purification process, there is a huge difference for the reverse osmosis water purifier regarding what approach is adopted to transport purified water for cleaning to the membrane and what approach is adopted to rinse the membrane surface. The more delicately the water is purified, the more possible clogging occurs. Therefore, for the existing water purifier, its filter membrane has to be changed frequently. It is desired by a consumer that a filter membrane can be used for a long term without changing the filter membrane while can still produce purified water in a larger amount. The spout faucet according to the present invention has a high applicability. Further, the discharge water from the RO device flows out from the sink table, which may be used as general service water; therefore, water might not be wasted.

## Claims

1. A spout faucet with a built-in switching valve, mounted on a tap water pipe, connected to a three-way pipe and a water processor, and capable of switching water supplied by the three-way pipe, **characterized by** comprising:
a tap water inlet port for letting in tap water;
a tap water outlet port for transporting the tap water to the water processor;
a discharge water inlet port for receiving discharge water outputted by a reverse osmosis membrane processor (hereinafter referred to as RO device);
a discharge water outlet port for discharging the discharge water;
a RO water inlet port for receiving reverse osmosis membrane filtered water (hereinafter referred to as RO water) as produced at the RO device;
a RO water outlet port for discharging the RO water, and
at connection positions between each inlet/outlet, comprising a valve box, a cylindrical valve, and a handle connected to the valve, wherein the valve box is arranged with a round cylindrical valve chamber having an axial line, the cylindrical valve comprises: two side faces with a spacing wall having a plurality of tap water outlet pores and a plurality of tap water inlet pores, an independent tap water circulation portion with the cylindrical wall of the valve as an entire periphery; adjacent to the spacing wall of the tap water circulation portion, with a bottom wall of the valve chamber as another spacing wall, an independent RO water circulation portion having a RO water inlet pore and a RO water outlet pore is formed; likewise, adjacent to a spacing wall of the tap water circulation portion, with a gland fixed to the valve box as a further spacing wall, an independent discharge water circulation portion having a plurality of discharge water inlet poress and a plurality of discharge water outlet pores is formed; a RO water producing position, a rinsing position, and a water position are arranged respectively, wherein the RO water producing position is the respective pore of the valve; through rotating the handle, the water supplied by the three-way pipe flows into the tap water circulation portion from the tap water inlet pore, flows into the water purifier from the tap water outlet pore, flows to the RO device through the water purifier, and then RO water is generated to flow out; on the other hand, by narrowing the discharge water inlet pores or discharge water outlet pores, the water pressure against the RO membrane is raised to thereby discharge condensed water for controlling flow rate; the rinsing position also experiences the same path as the RO water production; the RO water inlet pores on an inside-cylinder wall of the valve box is closed through the valve to thereby stop the RO water from flowing out, which flows out after rinsing and flushing the RO membrane in a large water flow; the water stop position is tap water inlet port for switching off the valve box through the valve.

2. The spout faucet according to claim 1, **characterized by** attaching a backwash position to the spout faucet of Claim 1, the backwash position is extending the axis of the valve to the tap water circulation portion, and opening a pore at a central axis of the valve to thereby provide a water circulation path; with the one spacing wall, the cylindrical pore inlet is sealed to thereby not form a discharge water circulation path; at the tap water circulation portion side of the valve in the discharge water circulation path and the at discharge water circulation portion of the valve, a discharge water branch connected to the discharge water circulation path is provided, respectively; a projection at one portion of the tap water circulation portion is provided between a shaft outer wall of the spacing wall of the tap water circulation portion and an inner-wall of an outer cylinder, a front end of the projection having a tap water outlet pore, such that the tap water flows from a part of the tap water outlet pores at the front end of the projection to the discharge water inlet port of the valve box, to backwash and rinse the water purifier and the reverse osmosis device; at the tap water outlet pores of the valve box, the backwashing water flows into the discharge water branch, sequentially through the discharge water circulation path and the discharge water branches of the discharge water circulation path, flows out from the discharge water outlet port of the valve box.

3. The spout faucet according to claim 1, **characterized by** removing the tap water inlet port, the tap water outlet port, and the tap water inlet pores and tap water outlet pores of the valve of Claim 1, and partitioning the spacing wall between the tap water circulation portion and the RO water circulation portion, changing the two spacing walls forming the tap water circulation portion inside the valve to one spacing wall which merely partitions the RO water circulation portion and the discharge water circulation portion; providing a magnetic block on the valve, and providing a steering switch on the valve box, so as to induct with the magnetic block to perform water supply or water stop.
